# EUROPEAN PATENT SPECIFICATION

(11) **EP 0 560 313 B1**
(45) Date of publication and mention of the grant of the patent: **08.01.1997**
(21) Application number: 93103811.1
(22) Date of filing: 10.03.1993
(51) Int. Cl.: B60P 3/08, B60P 1/64, B62D 53/04

(54) **A road vehicle with a removable load-carrying superstructure, particularly for transporting motor vehicles**
Strassenfahrzeug mit Wechselaufbauten, insbesondere zum Transport von Kraftfahrzeugen
Véhicule routier avec superstructure de chargement amovible, notamment pour le transport de véhicules automobiles

(30) Priority: 13.03.1992 IT TO920220
(43) Date of publication of application: 15.09.1993
(73) Proprietor: ROLFO S.p.A., I-12042 Bra (Cuneo) (IT)
(72) Inventor: Rolfo, Giorgio, I-12042 Bra (Cuneo) (IT)
(74) Representative: Saconney, Piero

(56) References cited:
- EP-A- 0 298 384
- AU-A- 4 667 779
- DE-A- 2 149 062
- DE-A- 2 223 748
- DE-U- 1 939 002
- DE-U- 9 205 891
- GB-A- 2 223 999
- US-A- 1 923 785
- US-A- 2 647 009
- US-A- 2 925 135
- US-A- 4 071 274

## Description

The present invention relates to a road vehicle with a removable load-carrying superstructure according to the preamble of claim 1.

A road vehicle of this type is known from the document DE-A-2 149 062. The solution known from this document provides a vehicle the load-carrying superstructure of which is interchangeable with other suitably designed structures for other purposes such as, for example, a load-carrying platform, a box body, a sheet-carrying superstructure, a boat-carrying superstructure, etc.. This enables a truck or similar chassis to be used full-time rather than always being used for one particular kind of transportation, such as the transportation of motor cars.

The road vehicles of the type considered are usually associated with a trailer. In many cases, after the tractor including the wheeled chassis has been separated from the load-carrying superstructure, it would be desirable to keep the superstructure coupled to the trailer so that the unit comprising the superstructure and the trailer may be moved altogether, without a tractor, to and from a parking or shunting area while the tractor with its wheeled chassis is being used with another load carrying superstructure.

The main object of the present invention is to provide a road vehicle of the type considered, which is provided with means for its coupling to a trailer in order to fulfil this task.

According to the invention this object is attained by a road vehicle as defined in the characterising portion of claim 1.

Thanks to the claimed solution, a manoeuvring tractor unit of the usual type, provided with a fifth wheel, can be quickly coupled to the unit comprising the load-carrying superstructure and the trailer, with the superstructure suspended between the fifth wheel of the tractor and the draw bar of the trailer.

Another object of the invention is to provide a road vehicle having the features of claim 1 and which allows to carry out the operations of separating the two portions of the vehicle and reconnecting more quickly and safely than as with the vehicle of the document DE-A-2 149 062.

This object is attained through the features of the dependent claims.

The characteristics and advantages of the invention will be understood better from a reading of the detailed description which follows, with reference to the appended drawings, which are given by way of non-limiting example and in which:
Figure 1 is a side elevational view of a truck with a removable superstructure in the form of a vehicle-carrying superstructure
Figures 2 and 3 are elevational views similar to that of Figure 1, showing the truck and the vehicle-carrying superstructure separately,
Figure 4 is a shortened plan view of the chassis of the truck, in which the locating means of the superstructure which can be connected to the chassis are shown in broken outline,
Figure 5 is a fragmentary perspective view of corresponding and interconnectible portions of the chassis of the motor vehicle and of the removable load-carrying structure, near the front end of the vehicle,
Figure 6 is a fragmentary perspective view showing in greater detail the mutual locating means which appear in Figure 5,
Figure 7 is a fragmentary perspective view of corresponding and interconnectible portions of the motor vehicle chassis and of the load-carrying structure, near the rear end of the vehicle,
Figure 8 is a fragmentary perspective view from below showing in greater detail the mutual locating means which appear in Figure 7,
Figure 9 is a schematic side elevational view of a load-carrying structure detached from the respective motor vehicle and coupled to a trailer,
Figure 10 is a fragmentary side elevational view of the region indicated by the arrow X in Figure 9, and
Figure 11 is a fragmentary perspective view showing, on an enlarged scale, a rear rigid attachment for coupling the load-carrying structure to the trailer.

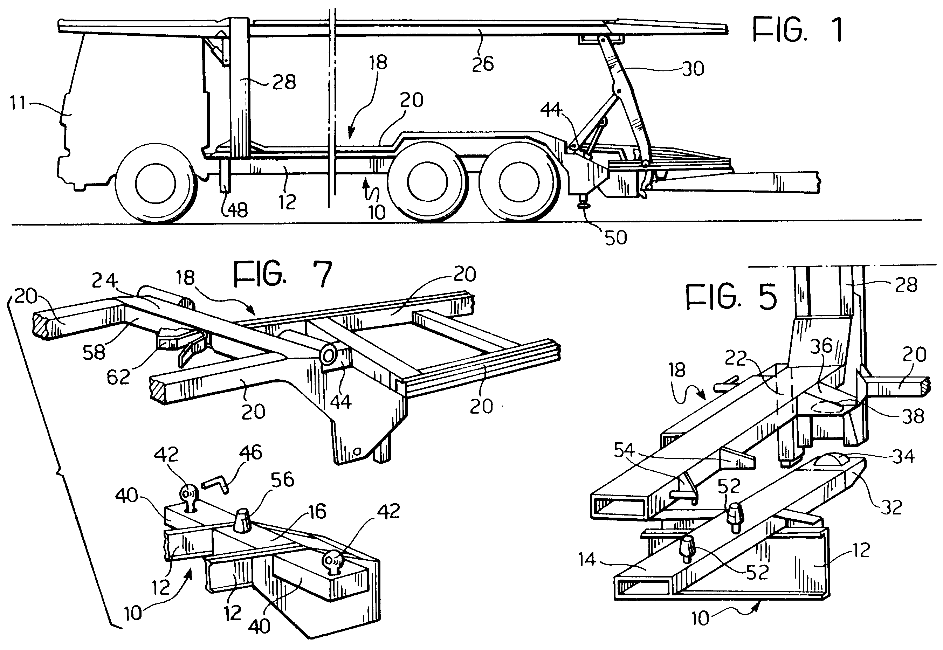

With reference to Figures 1 to 4, a truck or a tractor unit for a truck-trailer unit for transporting motor vehicles includes a wheeled chassis, generally indicated 10. The front portion of the chassis 10 carries a cab 11.

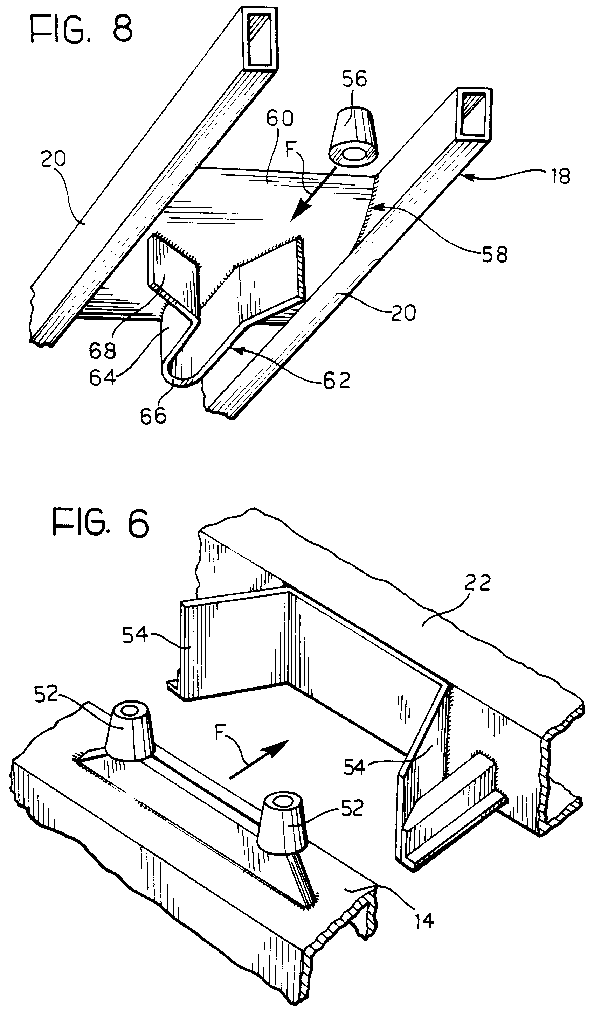

The chassis 10 (see also Figure 5 and 7) includes a pair of side members 12 interconnected, inter alia, by a front cross member 14 and by a rear cross member 16.

The chassis 10 is associated with a load-carrying superstructure which, in the embodiment shown, is in the form of a vehicle-carrying superstructure of the type with two superposed load-carrying platforms.

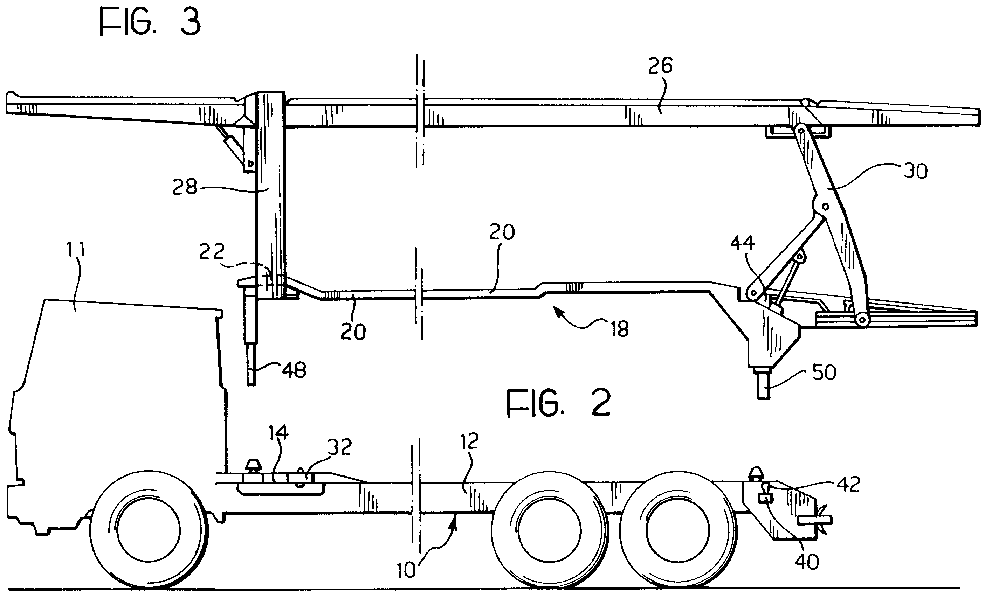

The superstructure, all of which is visible in Figures 1 and 3, in turn includes a base frame 18 which is separate from the chassis 10 of the vehicle. The frame 18 is constituted essentially by a pair of shaped side members 20 interconnected by cross members, including a front cross member 22 and a rear cross member 24.

The base frame 18 of the superstructure is equipped with tracks (not shown) for supporting the wheels of the motor vehicles (normally motor cars) to be transported and thus constitutes a lower load-carrying platform.

The removable structure supports, on the base frame 18, an upper load-carrying platform which is also used for transporting vehicles and is indicated by the reference numeral 26, which also indicates its side members.

The upper load-carrying platform 26 is supported on the base frame or lower load-carrying platform 18 in a manner such that it can be lowered, by means of a pair of front uprights 28 and a pair of rear uprights 30, all as described and illustrated in the document DE-A-2 149 062.

To advantage, the vehicle-carrying superstructure (or other load-carrying structure) is fixed and supported on the chassis 10 of the vehicle as follows.

At each end of the front cross member 14 of the chassis 10 of the vehicle is one of a pair of bracket-like supports 32, one of which can best be seen in Figure 5. Each bracket-like support 32 has mutual fixing means of the so-called "twist-lock" type with a rotatable key or ogive 34.

In correspondence with the bracket-like supports 32, the front cross member 22 of the superstructure frame has corresponding plates 36 with slots 38 for the passage of respective rotatable ogives 34.

With reference in particular to Figure 7, in correspondence with the rear cross member 24 of the superstructure frame 18, the side members 12 of the chassis 10 of the vehicle carry a pair of lateral bracket-like supports 40. Each of the bracket-like supports 40 has ball engagement means 42. The cross member 24 of the superstructure frame 18 correspondingly incorporates stirrups 44 for engaging the balls 42. The stirrups 44 enable the rear portion of the superstructure frame 18 to be fixed to the chassis 10 of the vehicle and rapidly detached therefrom by means of pins 46 which can be inserted in the balls 42.

With reference to Figures 1 and 3, the superstructure frame 18 has retractable telescopic front and rear legs 48 and 50.

The chassis 10, on the other hand, is supported by the wheels, by means of pneumatic suspensions (not shown).

In order to separate the vehicle from the load-carrying structure, the support legs 48 and 50 are extended to the ground, the quick-release mutual fixing means 34-36 and 42-44 are released, and the pneumatic suspensions are then deflated, whereupon the ogives 34 come out of the slots 38 vertically and the balls 42 come out of the stirrups 44 vertically. At this point, the vehicle can move away, withdrawing its chassis 10 from beneath the frame 18, which remains supported on its legs 48 and 50.

Alternatively, the chassis 10 of the vehicle may have hydraulic jacks (not shown) for lifting the superstructure. In this case, in order to separate the vehicle from the superstructure, firstly the fixing means 34-36 and 42-44 are released, after which the superstructure is lifted by means of the hydraulic jacks and the legs 48 and 50 are then extended to the ground in order to support the superstructure independently of the vehicle. After this, the hydraulic jacks are disengaged from the superstructure and the chassis 10 of the vehicle can be withdrawn from beneath the superstructure frame 18.

The operation of reconnecting the vehicle to the superstructure takes place by means of the operations described above carried out in reverse, but is facilitated by mutual location means on the chassis 10 and the frame 18. These means are such that, when the chassis 10 is inserted beneath the frame 18, the mutual fixing means 34-36 and 42-44 are aligned for re-engagement as will be described below.

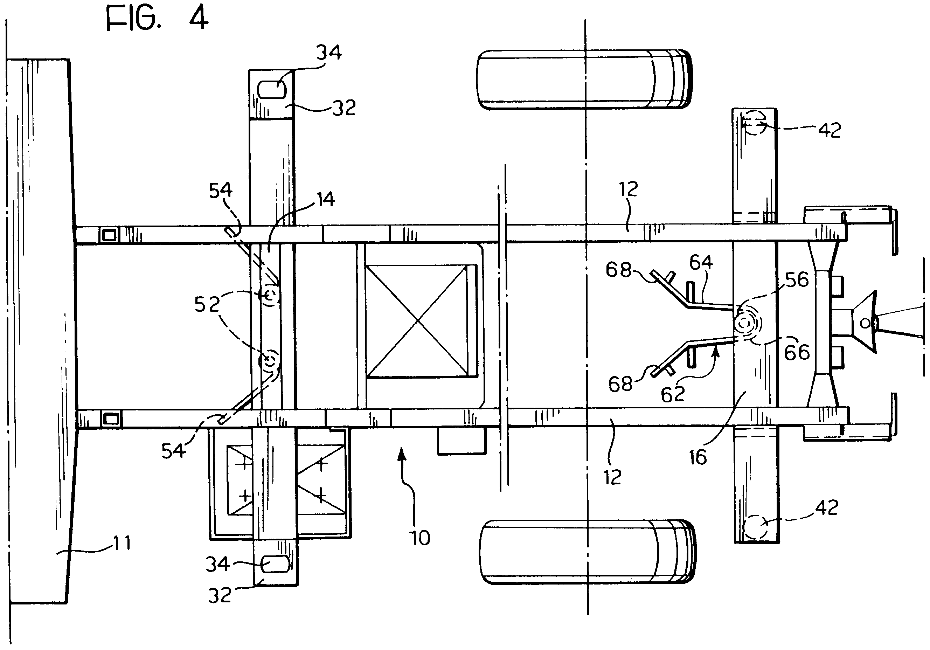

A preferred embodiment of the mutual locating means will now be described with particular reference to Figures 2 and 4 as well as with reference to Figures 5 and 6 as regards the front locating means and to Figures 7 and 8 as regards the rear locating means.

As can be seen in Figures 2, 4, 5 and 6, the front cross member 14, or another adjacent cross member of the chassis 10 of the vehicle, carries a pair of vertical pins 52 which are disposed side by side and, preferably, are in the form of upwardly-convergent frustoconical rollers, as shown. The rollers or pins 52 are disposed symmetrically with respect to the centreline of the chassis 10.

The cross member 24 of the base frame 18 of the superstructure carries a so-called "bell" constituted by a pair of cheeks 54 of strong sheet metal. The two cheeks 54 face forwardly and converge rearwardly in order to receive the rollers or pins 52 when the chassis 10 is fully re-inserted (as indicated by the arrow F of Figure 6). When the pins or rollers 52 reach the bases of the two cheeks 54, that is, the position shown in the left-hand portion of Figure 4, the mutual fixing means 34-36 are aligned.

With reference to Figures 2, 4, 7 and 8, the rear cross member 16 of the chassis 10 has a vertical pin 56 which is on the centreline of the chassis, and is also preferably in the form of a frustoconical roller identical or similar to the rollers 52.

An apron 58 extending between the two side members 20 of the base frame 18 of the superstructure has a front lead-in portion 60 which is inclined upwardly towards the front.

The lower face of the apron 58 carries a so-called "bell" constituted by a V-shaped structure of strong sheet metal, generally indicated 62. The bell 62, which serves to receive the pin 56, is open towards the front of the base frame 18. In particular, the bell 62 includes a substantially U-shaped end portion 64 with a rounded end wall 66 corresponding to the peripheral surface of the pin 56. The mouth of the U-shaped portion 64 is constituted by a pair of converging cheeks 68. When the chassis 10 of the vehicle is reinserted beneath the base frame 18 of the superstructure, as indicated by the arrow F of Figure 18, the pin 56 enters the bell 62 beneath the apron 58. The lead-in surface 60 of the apron serves to guide the pin 56 vertically if the frame 18 is too low or if the chassis 10 is too high.

When the pin 56 abuts the end wall 66 of the bell 62, as shown in the right-hand portion of Figure 4, the rear mutual fixing means 42-44 are vertically aligned.

Once vertical alignment has been achieved as described above, the chassis 10 can be raised by the inflation of its pneumatic suspensions, so that the fixing means 32-34 and 42-44 are re-engaged and can be locked again. With the frame 18 locked on the chassis, the support legs 48 and 50 can thus be retracted and the vehicle is ready to travel with its superstructure.

The fact that the rollers 52 and 56 are conical facilitates the correction of any slight vertical misalignment when the chassis 10 is raised.

If the chassis 10 has hydraulic jacks, the superstructure is reconnected to the vehicle in a similar manner but the jacks are extended first of all until they support the frame 18, the legs 48 and 50 are then retracted and the jacks are contracted again so that the frame 18 descends onto the chassis 10 until the mutual fixing means 32-34 and 42-44 are re-engaged.

Naturally, the arrangement of the mutual locating means may be varied from that described and illustrated. In particular, the bells may be carried by the chassis 10 of the vehicle and the pins or rollers may be carried by the superstructure frame 18.

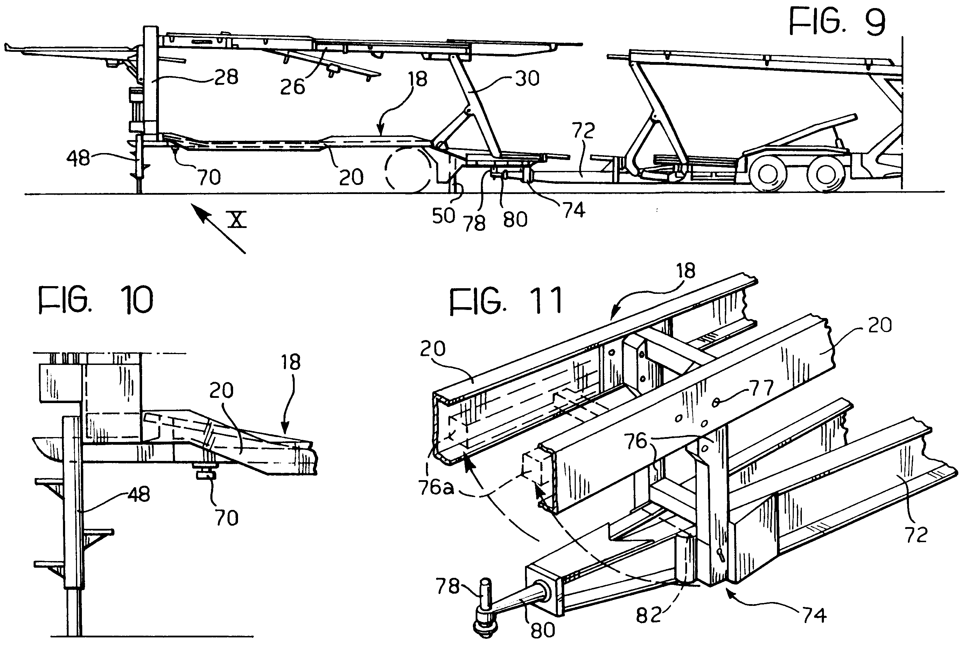

Reference will now be made to Figures 9 to 11 to describe a particular embodiment of a load-carrying structure such as that of the preceding drawings, in which the base frame is again indicated 18 and its side members are again indicated 20.

In Figures 9 and 10, the load-carrying structure is supported on the ground, without the motor vehicle, by means of its legs 48 and 50.

Near its front end, the frame 18 has a pin 70 of the type normally used to couple a semitrailer to the fifth wheel of a tractor unit for an articulated vehicle.

The purpose of the pin 70 will be explained below.

In Figure 9, it will be seen that the load-carrying or car-carrying superstructure is coupled to a car-transporting trailer. The draw bar of the trailer is indicated 72. A rear attachment carried by the base frame 18 of the load-carrying superstructure is generally indicated 74.

As illustrated in Figure 11, the attachment 74 includes a fork, the two arms or prongs of which are indicated 76. The fork 76 is articulated at 77 so that it can be moved angularly between a retracted position 76a in which it is shown in broken outline, and a lowered position, indicated in continuous outline.

A pin 78 (Figure 9) or other member projecting from the rear portion of the frame 18 serves to engage the towing eye 80 or another portion of the draw bar 72. When the towing eye 80 is engaged on the pin 78, the fork 76 firmly grasps the draw bar 72. A transverse pin 82 locks the fork 76 and the draw bar 72 together. The base frame 18 of the load-carrying superstructure and the trailer are thus fixed rigidly together as though they constituted a single semitrailer for an articulated vehicle.

The pin 70 is intended for coupling to a fifth wheel of a manoeuvring tractor unit which, once the legs 48 and 50 have been retracted, can tow the unit comprising the superstructure 18 and the trailer to move it to a parking or shunting area. In these conditions, the load-carrying superstructure is suspended between the fifth wheel of the tractor and the draw bar 72 of the trailer.

## Claims

1. A road vehicle of the type constituted essentially by a wheeled chassis (10) and a load-carrying superstructure, wherein the load-carrying superstructure in turn includes a base frame (18) which is separate from the chassis (10), the chassis (10) and the frame (18) are interconnected by quick-release mutual fixing means (34-36, 42-44) which can be mutually engaged and disengaged by a vertical relative movement of the chassis (10) and the frame (18), and the frame (18) has retractable legs (48, 50) for bearing on the ground one (10) of the chassis and the frame has means for causing the vertical relative movement for engaging and disengaging the mutual fixing means (34-36, 42-44) to enable the chassis (10) to be withdrawn from beneath the frame (18) and reinserted beneath it when the retractable legs (48, 50) are bearing on the ground, and the chassis (10) and the frame (18) have mutual locating means (52-54), 56-62) such that, when the chassis (10) is inserted beneath the frame (18), the mutual fixing means (34-36, 42-44) of the chassis (10) and of the frame (18) are aligned for mutual re-engagement,
characterised in that the base frame (18) of the load-carrying superstructure has a front pin (70) which can be coupled to a fifth wheel of a tractor unit, a rear member (78) which can be coupled to the draw bar (72) of a trailer, and a rear attachment (76) in which the draw bar (72) can be locked rigidly to form an articulated vehicle which includes, on the one hand, the tractor unit and, on the other hand, a rigid unit which in turn comprises the load-bearing structure and the trailer, with the load-carrying structure suspended between the fifth wheel of the tractor and the draw bar (72) of the trailer.

2. A vehicle according to Claim 1, characterised in that the rear attachment (74) comprises a retractable fork (76) which, in the condition of use, can grasp the draw bar (72) of the trailer and can be locked onto the draw bar.

3. A vehicle according to Claim 1 or 2, characterised in that the mutual locating means (52-54, 56-62) comprise vertical pins (52, 56) carried by one (10) of the chassis and the frame, near both ends thereof, and corresponding converging lead-in walls (54, 68) carried by the other (18) of the chassis and the frame.

4. A vehicle according to Claim 3, characterised in that the mutual locating means (52-54, 56-62) comprise, on the one hand, a single vertical pin (56) disposed near one end of one (10) of the chassis and the frame and a pair of vertical pins (52) disposed side by side near the other end of the same one (10) of the chassis and the frame and, on the other hand, on the other (18) of the chassis and the frame, a substantially V-shaped structure (62) for receiving and guiding the single pin (56) and stopping that pin at the end (66) of the V, and a pair of converging guide cheeks (54) for the two pins (52) of the pair.

5. A vehicle according to Claim 4, characterised in that the end of the V-shaped structure (62) is defined by a U-shaped end portion (64) with an end wall (66) which is rounded so as to correspond to the peripheral surface of the single pin (56).

6. A vehicle according to any one of claims 3 to 5, characterised in that the pins (52, 56) are carried by the chassis (10) and the lead-in walls (54, 68) are carried by the load-carrying superstructure.

7. A vehicle according to any one of claims 2 to 6, characterised in that the pins (52-56) are in the form of frustoconical rollers.

8. A vehicle according to any one of the preceding claims, characterised in that the means for causing the vertical relative movement are constituted by pneumatic suspensions of the chassis (10).

9. A vehicle according to any one of Claims 1 to 7, characterised in that the means for causing the vertical movement are constituted by jacks which are carried by the chassis (10) and which can lift the load-carrying superstructure.

## Patentansprüche

1. Straßenfahrzeug, das im wesentlichen aus einem auf Rädern ruhenden Chassis (10) und einem Transportaufbau besteht, wobei der Transportaufbau seinerseits einen Basisrahmen (18) aufweist, der vom Chassis (10) getrennt ist, wobei das Chassis (10) und der Rahmen (18) miteinander über schnelllösende gegenseitige Befestigungseinrichtungen (34-36, 42-44) verbunden sind, die mit einer relativen Vertikalbewegung des Chassis (10) und des Rahmens (18) gegenseitig in und außer Eingriff gebracht werden können, und wobei der Rahmen (18) einziehbare Füße (48, 50) für einen Stand am Boden besitzt, wobei entweder (10) das Chassis oder der Rahmen eine Einrichtung besitzt, um die relative Vertikalbewegung auszuführen, um die gegenseitigen Befestigungseinrichtungen (34-36, 42-44) in und außer Eingriff zu bringen, um das Chassis (10) unter dem Rahmen (18) herauszuziehen und es unter ihn wieder einführen zu können, wenn die einziehbaren Füße (48, 50) auf dem Boden stehen, und wobei das Chassis (10) und der Rahmen (18) gegenseitige Einstelleinrichtungen (52-54, 56-62) besitzen, so daß dann, wenn das Chassis (10) unter den Rahmen (18) eingeführt wird, die gegenseitigen Befestigungseinrichtungen (34-36, 42-44) des Chassis (10) und des Rahmens (18) für ein gegenseitiges Wiedereingreifen ausgerichtet werden, dadurch gekennzeichnet, daß der Basisrahmen (18) des Transportaufbaus einen vorderen Zapfen (70), der mit dem fünften Rad einer Zugfahrzeugeinheit gekuppelt werden kann, ein hinteres Element (78), das mit der Zugstange (72) eines Anhängers gekuppelt werden kann, sowie eine hintere Befestigung (76) besitzt, in der die Zugstange (72) starr verriegelt werden kann, um einen Sattelschlepper mit aufgesatteltem Anhänger zu bilden, der einerseits die Zugfahrzeugeinheit und andererseits eine starre Einheit aufweist, die ihrerseits aus dem Transportaufbau und dem Anhänger besteht, wobei der Transportaufbau zwischen dem fünften Rad des Zugfahrzeugs und der Zugstange (72) des Anhängers aufgehängt ist.

2. Fahrzeug gemäß Anspruch 1, dadurch gekennzeichnet, daß die hintere Befestigung (74) eine einziehbare Gabel (76) enthält, die im Betriebszustand die Zugstange (72) des Anhängers ergreifen und auf der Zugstange verriegelt werden kann.

3. Fahrzeug gemäß Anspruch 1 oder 2, dadurch gekennzeichnet, daß die gegenseitigen Einstelleinrichtungen (52-54, 56-62) vertikale Zapfen (52, 56) enthalten, die entweder (10) am Chassis oder am Rahmen in der Nähe von beiden Enden sitzen, sowie entsprechende zusammenlaufende Einführungswände (54, 68) besitzen, die entweder (18) am Rahmen oder am Chassis sitzen.

4. Fahrzeug gemäß Anspruch 3, dadurch gekennzeichnet, daß die gegenseitigen Einstelleinrichtungen (52-54, 56-62) einerseits einen einzelnen vertikalen Zapfen (56), der in der Nähe von einem Ende entweder (10) des Chassis oder des Rahmens angeordnet ist, sowie zwei vertikale Zapfen (52), die nebeneinander in der Nähe des anderen Endes ebenfalls entweder (10) des Chassis oder des Rahmens angeordnet sind, und andererseits entweder (18) am Rahmen oder am Chassis einen im wesentlichen V-förmigen Aufbau (62), um den einzelnen Zapfen (56) aufzunehmen und zu führen und diesen Zapfen am Ende (66) des V-förmigen Aufbaus anzuhalten, sowie zwei zusammenlaufende Führungswangen (54) für die beiden Zapfen (52) des Paares besitzen.

5. Fahrzeug gemäß Anspruch 4, dadurch gekennzeichnet, daß das Ende des V-förmigen Aufbaus (62) von einem U-förmigen Endteil (64) mit einer Endwand (66) gebildet wird, die so gebogen ist, daß sie der Mantelfläche des einzelnen Zapfens (56) entspricht.

6. Fahrzeug gemäß irgendeinem der Ansprüche 3 bis 5, dadurch gekennzeichnet, daß die Zapfen (52, 56) am Chassis (10) und die Einführungswände (54, 68) am Transportaufbau sitzen.

7. Fahrzeug gemäß irgendeinem der Ansprüche 2 bis 6, dadurch gekennzeichnet, daß die Zapfen (52-56) die Form von kegelstumpfförmigen Rollen besitzen.

8. Fahrzeug gemäß irgendeinem der bisherigen Ansprüche, dadurch gekennzeichnet, daß die Einrichtung, für die Ausführung der relativen Vertikalbewegung, von pneumatischen Aufhängungen des Chassis (10) gebildet wird.

9. Fahrzeug gemäß irgendeinem der Ansprüche 1 bis 7, dadurch gekennzeichnet, daß die Einrichtung für die Ausführung der relativen Vertikalbewegung von Kolben gebildet wird, die am Chassis (10) sitzen und den Transportaufbau anheben können.

## Revendications

1. Véhicule routier du type constitué essentiellement d'un châssis à roues (10) et d'une superstructure de chargement, dans lequel la superstructure de chargement comprend à son tour un cadre de base (18) qui est séparé du châssis (10), le châssis (10) et le cadre (18) étant interconnectés par des moyens de fixation mutuels (34 - 36,42 - 44) à libération rapide, qui peuvent être engagés et désolidarisés mutuellement par un déplacement relatif vertical du châssis (10) et du cadre (18), et le cadre (18) présentant des pattes rétractables (48, 50) devant porter sur le sol, un élément (10), parmi le châssis et le cadre, présentant des moyens pour provoquer le mouvement relatif vertical d'engagement et de désolidarisation des moyens de fixation mutuels (34 - 36, 42 - 44), pour permettre au châssis (10) d'être retiré d'en dessous du cadre (18) et réinséré au-dessous de lui, lorsque les pattes rétractables (48, 50) portent sur le sol, et le châssis (10) et le cadre (18) ayant des moyens de positionnement mutuels (52 - 54, 56 - 62), de manière que, lorsque le châssis (10) est inséré au-dessous du cadre (18), les moyens de fixation mutuels (34 - 36, 42 - 44) du châssis (10) et du cadre (18) soient alignés en vue d'un réengagement mutuel,
caractérisé en ce que le cadre de base (18) de la superstructure de chargement présente un tourillon avant (70) qui peut être couplé à une cinquième roue d'une unité tractrice, un organe arrière (78) qui peut être couplé à la barre de traction (72) d'une remorque, et une fixation arrière (76) dans laquelle la barre de traction (72) peut être verrouillée rigidement pour former un véhicule articulé comprenant, d'une part, l'unité tractrice et, d'autre part, une unité rigide comportant à son tour la structure de chargement et la remorque, la structure de chargement étant suspendue entre la cinquième roue du tracteur et la barre de traction (72) de la remorque.

2. Véhicule selon la revendication 1, caractérisé en ce que la fixation arrière (74) comprend une fourche rétractable (76) qui, à l'état d'utilisation, peut saisir la barre de traction (72) de la remorque et peut être verrouillée sur la barre de traction.

3. Véhicule selon la revendication 1 ou 2, caractérisé en ce que les moyens de positionnement mutuels (52 - 54, 56 - 62) comprennent des tiges verticales (52, 56) supportées par un élément (10) parmi le châssis et le cadre, à proximité de ses deux extrémités, et des parois avant (54, 68) convergentes correspondantes, supportées par l'autre élément (18) parmi le châssis et le cadre.

4. Véhicule selon la revendication 3, caractérisé en ce que les moyens de positionnement mutuels (52 - 54, 56 - 62) comprennent, d'une part, une tige verticale (56) unique disposée près d'une extrémité d'un élément (10) parmi le châssis et le cadre et un couple de tiges verticales (52) disposées côte à côte, près de l'autre extrémité du même élément (10) parmi le châssis et le cadre et, d'autre part, sur l'autre élément (18) parmi le châssis et le cadre, une structure (62) sensiblement en forme de V, pour recevoir et guider la tige (56) unique et arrêter cette tige au niveau de l'extrémité (66) du V, et un couple de joues de guidage (54) convergentes pour les deux tiges (52) du couple.

5. Véhicule selon la revendication 4, caractérisé en ce que l'extrémité de la structure (62) en forme de V est définie par une partie d'extrémité (64) en forme de U, ayant une paroi d'extrémité (66) qui est arrondie de manière à correspondre à la surface périphérique de la tige (56) unique.

6. Véhicule selon l'une quelconque des revendications 3 à 5, caractérisé en ce que les tiges (52, 56) sont supportées par le châssis (10) et les parois avant (54, 68) sont supportées par la superstructure de chargement.

7. Véhicule selon l'une quelconque des revendications 2 à 6, caractérisé en ce que les tiges (52 - 56) se présentent sous la forme de rouleaux tronconiques.

8. Véhicule selon l'une quelconque des revendications précédentes, caractérisé en ce que les moyens prévus pour provoquer le mouvement relatif vertical sont constitués de suspensions pneumatiques du châssis (10).

9. Véhicule selon l'une quelconque des revendications 1 à 7, caractérisé en ce que les moyens prévus pour provoquer le mouvement vertical sont constitués de vérins supportés par le châssis (10) et pouvant lever la superstructure de chargement.
